# FASCICULE DE BREVET EUROPEEN

(11) **EP 1 099 477 B1**
(45) Date de publication et mention de la délivrance du brevet: **03.01.2007**
(21) Numéro de dépôt: 00403037.5
(22) Date de dépôt: 31.10.2000
(51) Int. Cl.: B01J 27/128, B01J 27/12, C10G 49/02, C10G 45/48, C10G 45/52, B01J 23/40, B01J 23/89

(54) **Catalyseur bimétallique comprenant du fluor et du chlore et son utilisation pour l'hydrogénation des composés aromatiques**
Chlorierter und fluorierter bimetallischer Aromatenhydrierungskatalysator
Chlorinated and fluorinated bimetallic catalyst and its use in aromatics hydrogenation

(30) Priorité: 10.11.1999 FR 9914142
(43) Date de publication de la demande: 16.05.2001
(73) Titulaire: Institut Français du Pétrole, 92852 Rueil-Malmaison Cedex (FR)
(72) Inventeur: Marchal-George, Nathalie, 69230 Saint Genis Laval (FR); Kasztelan, Salvik, 92500 Rueil-Malmaison (FR)

(56) Documents cités:
- EP-A- 0 751 204
- FR-A- 1 596 032
- FR-A- 2 695 648
- US-A- 3 943 053

## Description

La présente invention concerne un catalyseur, tel que défini dans la revendication indépendante 1, supporté à base de métaux du groupe VIII, distincts l'un de l'autre, et comprenant au moins deux halogènes. L'invention concerne également l'utilisation de ce catalyseur dans un procédé pour l'hydrotraitement de charges hydrocarbonées contenant de faibles teneurs en soufre et en particulier pour l'hydrogénation de composés aromatiques inclus dans ces charges.

Les procédés d'hydrotraitement sont fréquemment utilisés dans les opérations de raffinage des coupes pétrolières pour améliorer les caractéristiques des produits finis en termes de spécifications requises pour atteindre la qualité des produits et les normes de pollution.

Actuellement, les coupes gazoles, qu'elles proviennent de la distillation ou qu'elles soient issues d'un procédé de conversion tel qu'un craquage catalytique, contiennent des quantités non négligeables de composés aromatiques, azotés et soufrés. Dans le cadre législatif actuel de la majorité des pays industrialisés, le carburant utilisable dans les moteurs doit contenir une quantité de soufre inférieure à 500 partie par million en poids (ppm). Dans un avenir très proche, cette quantité maximale va être ramenée à 350 ppm à l'horizon 2000, puis à 50 ppm à l'horizon 2005 pour les pays membres de la Communauté Européenne. Concernant la teneur en composés polyaromatiques dans les gazoles, cette teneur risque d'être abaissée à une valeur très basse (de l'ordre de 1 à 2 %) à partir de 2005. Dans ce cadre, l'hydrogénation des polyaromatiques contenus dans les coupes gazoles revêt donc aussi une importance toute particulière, du fait des nouvelles normes en soufre et en composés aromatiques dans ce type de combustibles.

La désulfuration se fait généralement dans des conditions et sur des catalyseurs qui ne sont pas capables d'assurer simultanément l'hydrogénation des composés aromatiques. Il est nécessaire d'effectuer alors un premier traitement de la coupe pour diminuer la teneur en soufre suivi d'un second traitement afin d'hydrogéner les composés aromatiques contenus dans cette coupe. Cette seconde étape est généralement réalisée par mise en contact de la coupe, en présence d'hydrogène, avec un catalyseur, généralement à base de métal noble. Cependant, du fait que le procédé de désulfuration ne permet jamais d'éliminer totalement les composés soufrés et azotés, les catalyseurs utilisés doivent pouvoir opérer en présence de ces composés et par conséquent contenir des phases actives ayant de bonnes propriétés thio-résistantes.

L'objectif de la présente invention est de fournir un nouveau catalyseur pour la désulfuration de coupes pétrolières et pour l'hydrogénation d'aromatiques et polyaromatiques présents dans ces mêmes coupes.

### Art antérieur

Les catalyseurs à base de métaux nobles sont reconnus pour leur performance en matière d'hydrogénation des aromatiques. Toutefois, ils sont extrêmement sensibles à la présence de soufre qui est un inhibiteur puissant de l'activité des métaux nobles. Pour éviter l'empoisonnement par le soufre de la phase hydrogénante, il semble préférable que les métaux soient déposés sur un support acide tel que l'alumine ou la silice alumine.

Dans le cas de l'utilisation de support de type alumine (brevet US-A-3 943 053), il est rapporté qu'il est nécessaire de contrôler précisément les teneurs en métal, ainsi que les conditions de préparation. Cette contrainte entraîne des inconvénients évidents en terme de flexibilité lors de l'extrapolation industrielle de ces formulations. L'utilisation de supports à base de silice-alumine a par ailleurs été rapportée. On peut par exemple citer les brevets US-A-4 960 505, 5 308 814 et 5 151 172. Ces différents documents enseignent que le type de zéolithe permettant d'obtenir les propriétés recherchées est très spécifique. D'autre part, l'utilisation de tels supports présente plusieurs inconvénients majeurs, parmi lesquels leur préparation, qui inclut une étape de mise en forme nécessitant l'utilisation de liants minéraux, tels que les alumines. Les méthodes de préparation doivent donc permettre des dépôts sélectifs des métaux nobles sur le matériau zéolithique par rapport au dépôt sur le liant, ce qui présente une spécificité supplémentaire liée à ce type de catalyseurs.

Pour augmenter l'acidité de catalyseurs de type platine/alumine, J.P. Franck et al. (CR Acad. Sci. Paris, Série C, t284 (1977) 297) et J. Cosyns et al. (CR Acad. Sci. Paris, Série C, t284 (1978) 85) ont incorporé à la composition catalytique une quantité limitée d'halogène et en particulier de fluor.

Plusieurs brevets décrivent des procédés d'hydrogénation de composés aromatiques grâce à des catalyseurs dont la composition comprend un halogène. En particulier, la demande de brevet EP 0 751 204 décrit un procédé d'hydrogénation d'aromatiques avec injection de chlore sur un catalyseur à base d'un métal noble et contenant au moins 1 % d'un halogène pour augmenter l'activité hydrogénante du catalyseur.

Le brevet US 3,943,053 concerne une méthode pour l'hydrogénation des composés aromatiques à l'aide d'un catalyseur comprenant deux métaux nobles, à savoir le platine et le palladium, et une quantité de chlore comprise entre 1,2 et 2,5 % en poids.

Le brevet FR-A-2 413 127 décrit un catalyseur contenant métaux du groupe VIII présentant une résistance améliorée au soufre, pour l'hydrogénation d'aromatiques.

La demande de brevet EP 0 955 090 divulgue un catalyseur comprenant deux métaux nobles (Pt et Pd), du fluor et du chlore. La composition catalytique est telle que la teneur en fluor soit comprise entre 0,5 et 1,5 % en poids et la teneur en chlore entre 0,3 et 2 % en poids.

### Intérêt de l'invention

Il a été découvert par la demanderesse qu'un catalyseur, tel que défini dans la revendication 1, utilisé dans les procédés d'hydrotraitement et en particulier dans l'hydrogénation des composés aromatiques, comprenant au moins deux métaux distincts du groupe VIII de la classification périodique des éléments, du chlore et du fluor et au moins une matrice oxyde amorphe, la composition catalytique étant telle que la quantité de fluor représente est comprise entre 1.8 et 15% en poids de la masse totale dudit catalyseur, conduit à de meilleures performances en terme de taux d'hydrogénation des composés aromatiques que les catalyseurs de l'art antérieur comprenant soit un seul métal du groupe VIII, soit une faible quantité d'halogène. Le taux élevé de conversion des composés aromatiques en composés saturés correspondants obtenu avec le catalyseur de la présente invention est lié aux effets synergiques surprenants de l'association des métaux d'une part, et de la combinaison des halogènes, présents à des teneurs plus élevées que celles de l'art antérieur, d'autre part. Il résulte de ce taux d'hydrogénation élevé une très bonne résistance du catalyseur au soufre.

Le catalyseur selon l'invention permet de réaliser avantageusement l'hydrodésulfuration et l'hydrogénation des composés aromatiques présents dans des charges hydrocarbonées contenant des composés soufrés. Plus particulièrement, les charges hydrocarbonées pouvant être traitées sont des coupes gazoles issues de la distillation du pétrole brut et des divers procédés de conversion tels que les coupes appelées "cycle oils", issus des procédés de craquage catalytique. La charge que l'on peut traiter par le procédé utilisant le catalyseur de l'invention présente des teneurs en soufre inférieures à 2000 ppm en poids, de préférence de 0,01 à 500 ppm en poids. Ce catalyseur peut aussi convenir pour tout procédé visant à hydrogéner tout ou partie des composés aromatiques d'une charge contenant des traces de composés soufrés, tel que l'hydrogénation des aromatiques dans les huiles alimentaires et dans les solvants.

### Description de l'invention

Le catalyseur selon l'invention est définit dans le libellé de la revendication 1 et contient au moins deux métaux du groupe VIII de la classification périodique des éléments, distincts l'un de l'autre, au moins une matrice oxyde amorphe, du chlore et du fluor, la quantité de fluor est comprise entre 1,8 et 15% en poids de la masse totale du catalyseur.

Dans tout ce qui suit, on entend par matrice amorphe, une matrice ne comprenant pas, dans sa structure, d'éléments actifs au sens catalytique.

Ledit catalyseur associe au moins un métal M1 du groupe VIII choisi dans le groupe constitué par le palladium, le rhodium, le nickel et le cobalt à un métal M2 du groupe VIII choisi dans le groupe constitué par le platine, l'iridium, l'osmium et le ruthénium. Le rapport atomique M1/M2 est de préférence compris entre 0,1/1 et 10/1.
Le catalyseur de la présente invention comprend en % poids par rapport à la masse totale du catalyseur :
- de 78 à 98,3% d'au moins une matrice oxyde amorphe,
- de 0,1 à 10%, d'au moins deux métaux du groupe VIII de la classification périodique tel qu'au moins un premier métal M1 soit choisi de préférence dans le groupe constitué par le palladium, le rhodium, le nickel et le cobalt, et au moins un second métal M2 soit choisi de préférence dans le groupe constitué par le platine, l'iridium, l'osmium et le ruthénium. Le rapport atomique M1/M2 est avantageusement compris entre 0,1/1 et 10/1,
- la quantité de fluor est comprise entre 1,8 et 15 % et de manière préférée entre 2 et 10 % en poids.
- de 0,1 à 10 % de chlore.

La matrice oxyde amorphe servant de support au catalyseur est choisie parmi les alumines de transition, les silices et les silices alumines et leurs mélanges. Ce type de supports présente une surface spécifique, déterminée par les techniques connues par l'homme du métier, comprise entre 100 et 600 m²/g, de préférence entre 150 et 500 m²/g. La matrice oxyde amorphe peut être utilisée sous forme de poudre ou préformée sous forme de billes ou d'extrudés.

Le catalyseur supporté de la présente invention peut être préparé selon toutes les méthodes bien connues par l'Homme de l'art.

D'une manière préférée, le catalyseur est obtenu par le dépôt du chlore et des métaux du groupe VIII sur un support contenant la matrice oxyde amorphe et le fluor, ci après dénommé le support fluoré. Le support fluoré est de préférence obtenu par l'introduction du fluor sous la forme d'acide fluorhydrique, de fluorure d'ammonium, d'hydrogénofluorure d'ammonium ou encore de composés organofluorés lors de la mise en forme de la matrice oxyde amorphe. Le support fluoré obtenu présente généralement une surface spécifique, déterminée par les techniques connues par l'homme du métier, comprise entre 100 et 500 m²/g, de préférence entre 150 et 420 m²/g.

Ensuite, les autres composants du catalyseur peuvent être introduits de façon séparée sur le catalyseur, selon des étapes successives d'addition utilisant des solutions d'un ou de plusieurs éléments, ou simultanément, en utilisant une solution commune des éléments. On peut avoir recours à plusieurs étapes d'imprégnation pour obtenir le catalyseur. Il est alors avantageux de procéder entre chaque étape d'imprégnation à des étapes de séchage et/ou d'activation (calcination ou réduction).

Selon un mode de préparation préféré de l'invention, la matrice oxyde amorphe est mise en contact avec le composé fluoré pour former un support contenant au moins 1,5 % en poids de fluor, puis le composé chloré est introduit, soit séparément, soit simultanément, lors de l'imprégnation des métaux, audit support fluoré.

La préparation du catalyseur se termine généralement par une étape de traitement en température sous air (calcination). Avant utilisation, le catalyseur est éventuellement réduit par passage d'un mélange gazeux contenant de l'hydrogène sur le catalyseur porté à une température généralement comprise entre 50 °C et 600 °C.

Les composés halogénés utilisés pour la préparation du catalyseur sont de préférence ajoutés à l'aide d'une solution aqueuse préparée à partir des acides minéraux correspondants, par exemple l'acide fluorhydrique HF ou l'acide chlorhydrique HCI. La décomposition d'un composé organofluoré et/ou organochloré sur le catalyseur est une méthode qui peut également convenir pour la préparation du catalyseur selon l'invention. Cette méthode est particulièrement avantageuse dans le cas du fluor car elle permet d'éviter, lors de la préparation du catalyseur, l'utilisation de solutions d'acide fluorhydrique, qui est maintenant réglementée. Le composé organochloré est par exemple le dichlorométhane, le trichlorométhane, le dichloroéthane, le trichloroéthane, le tétrachloroéthylène, 1'hexachloroéthane, le chloroforme.

Les précurseurs des métaux du groupe VIII utilisés sont des précurseurs conventionnels bien connus de l'homme du métier. Avantageusement, pour les métaux non nobles, on utilise les nitrates, les sulfates, les phosphates, les halogénures par exemple, chlorures, bromures et fluorures, les carboxylates par exemple acétates et carbonates. Pour les métaux nobles on utilise préférentiellement les nitrates quand ils existent, les halogénures, par exemple les chlorures, les acides tels que l'acide chloroplatinique, chloroiridique, les chlorometallates de métaux alcalins, les complexes chloro- ou hydroxo-amminés, les oxychlorures tels que l'oxychlorure ammoniacal de ruthénium. On peut également employer des complexes de coordination solubles dans les solvants organiques, tels que par exemple les complexes acétylacétonates. On peut employer également les complexes carbonyles.

Le catalyseur selon l'invention est utilisable pour le traitement de coupes hydrocarbonées. En particulier, il est utilisable dans un procédé d'hydrogénation de composés aromatiques présents dans les charges contenant des composés soufrés.
Il est préférable que la charge à traiter par le procédé utilisant le catalyseur de l'invention présente des teneurs en soufre inférieures à 2000 ppm en poids et de préférence de 0,01 à 500 ppm en poids.

Aussi, en fonction de la teneur en soufre de la charge à traiter, il peut être avantageux de prétraiter la charge afin de diminuer sa teneur en soufre par des procédés conventionnels d'hydrotraitement.

Un avantage du catalyseur de l'invention est qu'il présente de bonnes propriétés thio-résistantes, si bien que de faibles teneurs résiduelles en soufre ne perturbent pas l'activité dudit catalyseur.

Le procédé d'hydrogénation d'aromatiques selon l'invention est réalisé en général à des températures de 100 à 400 °C, de préférence de 150 à 380 °C. La pression opératoire est généralement de 0,1 à 30 MPa, de préférence de 1 à 20 MPa. La vitesse spatiale (VVH), exprimée en volume de charge liquide traitée par volume de catalyseur et par heure, est en général de 0,1 à 20 h⁻¹. Le rapport hydrogène/charge utilisé s'exprime en volume d'hydrogène mesuré dans les conditions normales par volume de charge liquide ; il est généralement de 50/1 à 2000/1.

Les exemples qui suivent illustrent l'invention sans en limiter la portée.

### Exemple n°1 : Préparation d'un support alumine.

Nous avons fabriqué un support à base d'alumine en grande quantité de façon à pouvoir préparer les catalyseurs décrits ci après à partir du même support mis en forme. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 m²/g, un volume poreux de 0,61 cm³/g et une distribution en taille de pore monomodale centrée sur 10 nm. L'analyse de la matrice par la diffraction des rayons X révèle que celle ci est composée uniquement d'alumine gamma cubique de faible cristallinité.

### Exemple n°2 : Préparation d'un support fluoré.

Nous avons fabriqué un support à base d'alumine contenant du fluor. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% (7% poids d'acide par gramme de gel sec) puis malaxé pendant 15 minutes dans un malaxeur en bras en Z. On introduit ensuite le fluor sous la forme de fluorure d'ammonium de manière à introduire 4% en masse de fluor et on malaxe encore 10 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 223 m²/g, un volume poreux de 0,66 cm³/g, contenant 3,76 % de fluor. L'analyse de la matrice par la diffraction des rayons X révèle que celle ci est composée uniquement d'alumine gamma cubique de faible cristallinité.

### Exemple n°3 : Préparation d'un catalyseur A : Pt-Pd/Alumine+Cl+F (non conforme).

La méthode utilisée consiste à introduire successivement les éléments en utilisant un excès de solution à partir du support de l'exemple 1. On introduit d'abord le chlore, puis le fluor et ensuite le platine. Le support est traité successivement avec une solution d'acide chlorhydrique à 2 % en Cl pendant 30 minutes de façon à obtenir la quantité de chlore recherchée sur le support. Après élimination de la solution, une solution d'acide fluorhydrique est mise en contact avec le support chloré pendant 1 h 30 min. Le support est ensuite rincé et l'imprégnation du platine est réalisée à l'aide d'acide hexachloroplatinique. Après 12 heures d'échange, le catalyseur est séché sous air sec pendant 2 heures à 530°C. Après réduction de ce catalyseur, le palladium est déposé, sous atmosphère neutre, par imprégnation en excès d'une quantité précise de bis-acétylacétonate de palladium. Le catalyseur est séché puis calciné 2 heures à 350°C. Le catalyseur (A) obtenu contient alors :
- 0,15 % en poids de platine
- 0,55 % en poids de palladium
- 0,95 % en poids de chlore
- 0,52 % en poids de fluor.

### Exemple n°4 : Préparation d'un catalyseur B: Pt-Pd/Alumine fluoré (conforme).

La méthode utilisée consiste à introduire successivement les éléments en utilisant un excès de solution à partir du support fluoré de l'exemple 2. On introduit le platine avec le chlore et ensuite le palladium. L'imprégnation du platine est réalisée à l'aide d'acide hexachloroplatinique dissous dans une solution d'acide chlorhydrique à 2 % en Cl. Après 12 heures d'échange, le catalyseur est séché sous air sec pendant 2 heures à 530°C. Après réduction de ce catalyseur, le palladium est déposé, sous atmosphère neutre, par imprégnation en excès d'une quantité précise de bis-acétylacétonate de palladium. Le catalyseur est séché puis calciné 2 heures à 350°C. Le catalyseur (B) obtenu contient alors :
- 0,15 % en poids de platine
- 0,54 % en poids de palladium
- 0,76 % en poids de chlore
- 3,44 % en poids de fluor.

### Exemple n°5 : Conversion hydrogénante pour une charge de type LCO

Dans cet exemple, les catalyseurs obtenus, comme décrit dans les exemples précédents, sont évalués au moyen d'un test catalytique, dont les conditions opératoires générales sont les suivantes :
- Pression totale : 60 bars
- Charge : LCO hydrotraité
- Réacteur: à courant ascendant.

Avant utilisation, le catalyseur subit une étape d'activation sous courant d'hydrogène à 450 °C pendant 2 heures. Cette réduction peut se faire, soit dans le réacteur du test catalytique (conditions *in situ*), soit dans une cellule de réduction annexe (conditions *ex situ*).

Dans le tableau 2 suivant, on a reporté les caractéristiques de la charge de type LCO hydrotraité.

**Tableau 2**

| | |
|---|---|
| Caractéristiques | Charge LCO |
| Densité à 20 °C | 0,898 |
| Soufre (ppm) | 128 |
| Azote (ppm) | 110 |
| Distillation (°C) | |
| Point initial | 171 |
| 10 % en volume | 238 |
| 50 % en volume | 301 |
| 90 % en volume | 377 |
| Point final | 405 |
| Composition en aromatiques (% en poids) | |
| Mono-aromatiques | 37 |
| Di-aromatiques | 15 |
| Tri-aromatiques | 2 |
| Total | 54 |
| CA*'(% poids) | 30 |

| | |
|---|---|
| (*) CA = Carbone aromatique mesuré par RMN | |

Les performances catalytiques des catalyseurs dont la description est faite dans les exemples précédents sont ensuite évaluées au cours du test catalytique dont les conditions opératoires sont les suivantes :
- Pression totale 60 bars
- VVH (vitesse spatiale) 1 litre de charge/litre de catalyseur/heure
- Température 280 °C
- Rapport-H₂/charge 450 Nl/Nl de charge

Dans le tableau 3 suivant, on indique la conversion des aromatiques obtenue avec les catalyseurs A et B. La charge LCO employée contient 128 ppm de S en poids.

**Tableau 3**

| Charge LCO | Catalyseur A | Catalyseur B |
|---|---|---|
| CA* charge initiale (% poids) | 30 | |
| CA* effluent (% poids) | 23 | 15 |
| % HDCA** | 23,3 | 50,0 |

| | | |
|---|---|---|
| (*) CA = Carbone aromatique mesuré par RMN (**) HDCA = taux d'hydrogénation du carbone aromatique. | | |

On constate que le catalyseur B se révèle supérieur en terme de conversion, et donc de résistance au soufre, au catalyseur A du fait de la forte teneur en fluor présente sur le catalyseur B. Une forte teneur en fluor se révèle donc positive sur l'activité d'une association de deux métaux du groupe VIII. Ce type de catalyseur permet donc de traiter des charges contenant des quantités relativement importantes de soufre en présentant un niveau élevé d'activité hydrogénante.

## Revendications

1. Catalyseur comprenant au moins une matrice oxyde amorphe, du chlore et du fluor et au moins deux métaux du groupe VIII, distincts l'un de l'autre, **caractérisé en ce que** la quantité de fluor représente de 1,8 à 15% en poids de la masse totale dudit catalyseur.

2. Catalyseur selon la revendication 1 **caractérisé en ce que** la quantité de fluor est comprise entre 2 et 10 % en poids de la masse totale du catalyseur.

3. Catalyseur selon la revendication 1 ou 2 **caractérisé en ce qu'**il contient, par rapport à sa masse totale, de 78 à 98,3 % d'au moins une matrice oxyde amorphe, de 0,1 à 10 % d'au moins deux métaux du groupe VIII et de 0,1 à 10 % de chlore.

4. Catalyseur selon l'une des revendications 1 à 3, **caractérisé en ce qu'**il contient au moins un métal M1 du groupe VIII choisi dans le groupe constitué par le palladium, le rhodium, le nickel et le cobalt et au moins un métal M2 du groupe VIII choisi dans le groupe constitué par le platine, l'iridium, l'osmium et le ruthénium.

5. Catalyseur selon la revendication 4 **caractérisé en ce que** le rapport atomique M1/M2 est compris entre 0,1/1 et 10/1.

6. Catalyseur selon l'une des revendications 1 à 5 **caractérisé en ce que** la matrice oxyde amorphe est choisie parmi l'alumine, la silice et la silice alumine.

7. Procédé de préparation d'un catalyseur selon l'une quelconque des revendications précédentes **caractérisé en ce que** le fluor est préalablement mis en contact avec la matrice oxyde amorphe pour former un support fluoré, puis on introduit le chlore et les métaux du groupe VIII, simultanément ou séparément.

8. Utilisation d'un catalyseur selon l'une des revendications 1 à 6 ou préparé selon la revendication 7 pour le traitement de coupes hydrocarbonées.

9. Utilisation selon la revendication 8 dans un procédé d'hydrogénation de composés aromatiques présents dans des coupes hydrocarbonées comprenant du soufre.

10. Utilisation selon l'une des revendications 8 à 9 dans un procédé réalisé à des températures de 100 à 400°C, à une pression opératoire de 0,1 à 30 MPa, à une vitesse spatiale, exprimée en volume de charge liquide traitée par volume de catalyseur et par heure, comprise entre 0,1 et 20, avec un rapport hydrogène/charge de 50/1 à 2000/1 en volume d'hydrogène par volume de charge.

## Claims

1. A catalyst comprising at least one amorphous oxide matrix, chlorine, fluorine and at least two distinct metals from group VIII, **characterized in that** the quantity of fluorine is in the range 1.8% to 15% by weight of the total catalyst mass.

2. A catalyst according claim 1, **characterized in that** the quantity of fluorine is in the range 2% to 10% by weight of the total catalyst mass.

3. A catalyst according to any one of claims 1 to 2, **characterized in that** it contains, with respect to the total mass, 78% to 98.3% of at least one amorphous oxide matrix, 0.1% to 10% of at least two group VIII metals, and 0.1 % to 10% of chlorine.

4. A catalyst according to any one of claims 1 to 3, **characterized in that** it contains at least one metal M1 from group VIII selected from the group formed by palladium, rhodium, nickel and cobalt and at least one metal M2 from group VIII selected from the group formed by platinum, iridium, osmium and ruthenium.

5. A catalyst according to claim 4, **characterized in that** the M1/M2 atomic ratio is in the range 0.1/1 to 10/1.

6. A catalyst according to any one of claims 1 to 5, **characterized in that** the amorphous oxide matrix is selected from alumina, silica and silica alumina.

7. A process for preparing a catalyst according to any one of the preceding claims, **characterized in that** the fluorine is first brought into contact with the amorphous oxide support to form a fluorinated support, then the chlorine and group VIII metals are introduced simultaneously or separately.

8. Use of a catalyst according to any one of claims 1 to 6, or prepared in accordance with the process of claim 7, for the treatment of hydrocarbon cuts.

9. Use according to claim 8 in a process for hydrogenating aromatic compounds present in hydrocarbon cuts comprising sulphur.

10. Use according to claim 8 or 9, in a process carried out at temperatures of 100°C to 400°C, at an operating pressure of 0.1 to 30 MPa, at a space velocity, expressed as the volume of liquid feed treated per unit volume of catalyst per hour, in the range 0.1 to 20, with a hydrogen/feed ratio of 50/1 to 2000/1 by volume of hydrogen per unit volume of feed.

## Patentansprüche

1. Katalysator, der mindestens eine amorphe Oxidmatrix, Chlor und Fluor und mindestens zwei Metalle der VIII. Gruppe, die voneinander verschieden sind, umfasst, **dadurch gekennzeichnet, dass** der Fluorgehalt 1,8 bis 15 Gew.-%, bezogen auf die Gesamtmasse des Katalysators, darstellt.

2. Katalysator nach Anspruch 1, **dadurch gekennzeichnet, dass** der Fluorgehalt im Bereich zwischen 2 und 10 Gew.-%, bezogen auf die Gesamtmasse des Katalysators, enthalten ist.

3. Katalysator nach Anspruch 1 oder 2, **dadurch gekennzeichnet, dass** er, bezogen auf seine Gesamtmasse, 78 bis 98,3 % mindestens einer amorphen Oxidmatrix, 0,1 bis 10 % mindestens zweier Metalle der VIII. Gruppe und 0,1 bis 10 % Chlor enthält.

4. Katalysator nach einem der Ansprüche 1 bis 3, **dadurch gekennzeichnet, dass** er mindestens ein Metall M1 der VIII. Gruppe, das aus der Gruppe bestehend aus Palladium, Rhodium, Nickel und Kobalt gewählt ist, und mindestens ein Metall M2 der VIII. Gruppe, das aus der Gruppe bestehend aus Platin, Iridium, Osmium und Ruthenium gewählt ist, enthält.

5. Katalysator nach Anspruch 4, **dadurch gekennzeichnet, dass** das Atomverhältnis M1/M2 im Bereich zwischen 0,1/1 und 10/1 enthalten ist.

6. Katalysator nach einem der Ansprüche 1 bis 5, **dadurch gekennzeichnet**, das die amorphe Oxidmatrix aus Tonerde, Kieselerde und Tonerde-Kieselerde gewählt ist.

7. Verfahren zum Herstellen eines Katalysators nach einem der vorhergehenden Ansprüche, **dadurch gekennzeichnet, dass** zunächst Fluor mit der amorphen Oxidmatrix in Kontakt gebracht wird, um einen fluorierten Träger zu bilden, dann Chlor und die Metalle der VIII. Gruppe gleichzeitig oder getrennt voneinander eingebracht werden.

8. Verwendung eines Katalysators nach einem der Ansprüche 1 bis 6 oder hergestellt nach Anspruch 7 zur Behandlung von Kohlenwasserstoff-Fraktionen.

9. Verwendung nach Anspruch 8 in einem Verfahren zur Hydrierung aromatischer Verbindungen, die in schwefelhaltigen Kohlenwasserstoff-Fraktionen vorliegen.

10. Verwendung nach einem der Ansprüche 8 bis 9 in einem Verfahren, das bei Temperaturen von 100 bis 400 °C, bei einem Betriebsdruck von 0,1 bis 30 MPa, bei einer Volumengeschwindigkeit, ausgedrückt in Volumen behandelten flüssigen Einsatzgutes pro Katalysatorvolumen und pro Stunde, im Bereich zwischen 0,1 und 20, bei einem Wasserstoff/Einsatzgut-Verhältnis von 50/1 bis 2000/1, ausgedrückt in Wasserstoffvolumen pro Einsatzgutvolumen, durchgeführt wird.
